# EUROPEAN PATENT APPLICATION

(11) **EP 1 437 167 A1**
(43) Date of publication of application: **14.07.2004**
(21) Application number: 04250090.0
(22) Date of filing: 09.01.2004
(51) Int. Cl.: B01D 39/08, B01D 39/16

(54) **Filter medium and method for preparing the same**

(30) Priority: 10.01.2003 JP 2003038986
(71) Applicant: Morimura Kousan Kabushiki Kaisha, Minoo-shi, Osaka (JP)
(72) Inventor: Morimura, Tadaki, Minoo-shi, Osaka (JP)
(74) Representative: Goddard, Frances Anna

(57) **Abstract**

This invention provides a filter medium (1) comprising at least 5,000 thermoplastic synthetic resin monofilaments (2) of 0.03 to 0.001 mm in diameter aligned in parallel orderly in a tape-like form, said monofilaments (2) being linked with each other in the longer direction thereof to form a plurality or number of linkage band portions (3) crossing therewith at almost right angles in substantial width direction thereof so as to keep the thus aligned monofilaments (2) in parallel.

There is also provided a method for preparing a filter medium (1) of membrane type made of thermoplastic synthetic resin monofilaments (12) of 0.03 to 0.001 mm in diameter in which said monofilaments (12) are spun out of a melt thermoplastic synthetic resin through a number of parallel or plurally lined spinning nozzles (11), air-cooled, drawn to increase fineness thereof, subjected to a modification treatment, orderly aligned in parallel to form a mono-layer, linked by linkage band portions (3) formed thereon at certain intervals to keep a parallel alignment thereof, and then stretched, said alignment being done by feeding said monofilaments (12) between at least one pair (16) of two tapered rollers fixed in the reverse direction with each other.

## Description

### BACKGROUND OF THE INVENTION

### Field of the Invention

This invention mainly relates to a novel filter medium for solid-liquid separation and a method for preparing the filter medium.

Conventional filter mediums are classified into various types which include a lattice net type such as screens, a fabric type made of woven or non-woven sheet, a stack of green cotton or compressed cotton fiber, and a porous type made of synthetic resin or organic membrane such as plane membrane and hollow yarn membrane.

Filtration by means of these filter mediums is necessarily accompanied by a fatal and inevitable problem of clogging thereof and how to solve the problem.

It has been impossible to completely avoid the problem of clogging because filtration and clogging are inseparably related to each other. Nowadays, filtration technology is progressing but it is still an important problem to improve troubles caused by clogging so as to conduct filtration more effectively.

In order to improve the clogging problem, a filter is generally replaced to new one or refreshed by, for example, back washing to reuse it under a refreshed condition.

However, a replacement of clogged filters inevitably discontinue filtration for a long time which causes a decrease in filtering efficiency and an increase in filtering cost.

On the other hand, pores formed on a filter of plane- or hollow yarn membrane type are clogged with particles to be filtered of similar diameter which are hardly removed by back washing. This affects improvement in clogging and sets limits to reuse the above mentioned filter.

In general, filters are used by changing them to those filters of the most suitable type depending on shapes, size, properties of a substance to be filtered.

As a change of filters markedly affects workability and operation as well as filtration efficiency, preferably the same filter can be applied for filtering variously formed substances without changing it. In other words, it is preferable that substances of different forms can be filtered off through the same filter.

It is out of the question that filtration itself is conducted insufficiently due to easiness of back washing as a matter of course.

A filter medium in which slits between adjacent monofilaments are used as a filtering space is disclosed by Japanese Patent Kokai Nos. 2000-170,407A and 2001-170,418A, and U. S. Patent No. 6,508,942. According to these disclosures, almost solid monofilaments themselves are converged and simply used as a filter medium by fixing one end thereof and keeping the other end free, which functions as an effective filter for specific purposes but is not complete for others.

There is used a filter element prepared by combing and paralleling a bundle of 1,000 to 2,500 very fine single fibers. It is, however, quite difficult and requires a great deal of effort, time and cost to comb and orderly parallel converged fibers even when the filter medium is a flat membrane. Especially, the above mentioned process is much more difficult when the filter medium is cylindrical in shape.

These difficulties might be overcome by means of a filter medium of membrane type having certain wider width in which single fibers are aligned in parallel orderly. In fact, however, there has not yet been provided such an improved filter medium, because it is difficult to align each of very fine fibers in parallel orderly while keeping certain width.

Japanese Patent Kokai No. 11-172,562A discloses a technique for combing a bundle of monofilaments bonded by a sizing agent in the width direction by means of air flow with heating. However, an application of sizing agent to filter mediums is beside the question in this case, while such a combing technique is not useful to prepare a filter medium in which monofilaments are aligned in parallel orderly. The disclosed technique is less suggestive with regard to the monofilament filter medium.

Further, Japanese Patent Kokai No. 11-200,136A discloses a technique for combing a bundle of fibers in the width direction by means of air flow, which is also useless to the monofilament filter medium for the same reason as described above.

Published Japanese Patent No. 6-11,371B discloses a method for preparing a cylindrical filter in which a filter support member is grooved for winding a filter medium of wire type. According to this prior art, it is clearly difficult to wind up a wire as a filter medium in parallel orderly, especially when the filter is cylindrical.

Published Japanese Patent No. 4-26,882B discloses a cylindrical filter comprising metal or rigid plastic coil springs. This does not disclose nor suggest a technique for winding very fine monofilaments of high flexibility in parallel orderly, although it is easy to mold such a cylinder because of metallic or rigid plastic properties of the material used.

Japanese Patent No. 44-3,728B discloses a technique for winding a wire material on a cylindrical filter support. The material is an aluminum wire of 0.5 mm in diameter, which is fed and winded as a solid wire. Accordingly, the disclosure is quite different from a technique for preparing a filter medium from very fine monofilaments.

According to this invention, there is provided a novel filter medium of wider tape type in which at least 5,000 or more of monofilaments are aligned in parallel orderly, the alignment being kept.

There is also provided a novel method for preparing a filter medium of wide width in which monofilaments as very fine single fibers are aligned in parallel orderly, thereby such an alignment being kept securely.

The filter medium of this invention can be effectively applied to various types of substances to be filtered off and regenerated easily and almost completely by back washing.

Methods for combing a bundle of spun fibers (multifilaments) in a secondary process to distribute and align in parallel as single fibers are disclosed in, for example, Japanese Patent Kokai Nos. 11-172,562A and 11-200,136A. Either of them is mainly intended to comb fibers and imperfectly plays a roll as a means for aligning them as a single layer in parallel compared with aligning rollers 6 and 6 of this invention.

Further, techniques for winding a single solid wire as a coil or cylinder are disclosed in Published Japanese Patent Nos. 44-3,728B, 4-26,882B and 6-11,371B, thereby a wire of 0.5 mm in diameter and a spring in shape being used in the first and the second patents, respectively. The filtration efficiency is restricted by their shape and parallel alignment and is insufficient compared with this invention.

The filter medium of this invention is produced in continuous form and is then cut into a filter module of predetermined length.

### SUMMARY OF THE INVENTION

Accordingly, preferred embodiments of the invention seek to provide a filter medium comprising at least 5,000 thermoplastic synthetic resin monofilaments of 0.03 to 0.001 mm in diameter aligned in parallel orderly in a tape-like form, said monofilaments being linked with each other in the longer direction thereof to form a plurality or number of linkage band portions crossing therewith at almost right angles in substantial width direction thereof so as to keep the thus aligned monofilaments in parallel.

Preferred embodiments of the invention further seek to provide a method for preparing a filter medium of membrane type made of thermoplastic synthetic resin monofilaments of 0.03 to 0.001 mm in diameter in which said monofilaments are spun out of a melt thermoplastic synthetic resin through a number of parallel or plurally lined spinning nozzles, air-cooled, drawn to reduce thickness thereof, subjected to a modification treatment, orderly aligned in parallel to form a mono-layer, linked by linkage band portions formed thereon at certain intervals to keep a parallel alignment thereof, and then stretched, said alignment being done by feeding said monofilaments between at least one pair of two tapered rollers fixed in the reverse direction with each other.

### BRIEF DESCRIPTION OF THE DRAWINGS

The present invention will now be described, by way of example only, with reference to the following drawings, in which:-
- Fig. 1: is an illustrative partial plan view of a filter medium of this invention.
- Fig. 2: is an illustrative partial plan view of another filter medium of this invention.
- Fig. 3: is a flow chart of a filter medium production process according to this invention.

### DETAILED DESCRIPTION AND PREFERRED EMBODIMENTS

Monofilaments used in this invention are as spun and non-twisted long fibers having nearly uniform and smooth fineness and surface across the length.

A cross section of the monofilaments is preferably circular, although it may be triangular, square, elliptic, etc. and is not limited to one form. Excessively complicated form is not preferable from a standpoint of filtration or back washing efficiency.

Some stretch properties of synthetic resins are effectively used the filter medium and the method for preparing it.

A synthetic resin fiber has remarkable stretch properties compared with an inorganic fiber or metal wire. For example, breaking extension of carbon fiber and steel wire is about 1.5 % and 2.0 %, while that of nylon (polyamide) and polypropylene fibers is about 20.0 % and 40.0 %, respectively.

Preferably, stretch modulus of thermoplastic synthetic resin monofilaments used in this invention is relatively higher than that of metal or inorganic fibers.

From this point of view, a thermoplastic resin used in this invention preferably includes acetate, vinylon, nylon, polyester and polypropylene, and more preferably nylon, polyester and polypropylene.

The filter medium of this invention comprises at least 5,000 or more of monofilaments and may comprise much more of them, if necessary.

A characteristic feature of preferred embodiments of this invention is that a filter module may be formed from the filter medium as wide as possible easily and securely. This is the reason why the filter medium of this invention comprises at least 5,000 or more of monofilaments. For example, a filter module comprising 5,000 monofilaments of 0.03mm in diameter is 15 cm in width, while 5,000 monofilaments of 0.001 mm in diameter yields 5cm in width.

Conventional width is at most 3 cm when a filter module is formed by combing and aligning in parallel 2,500 multifilaments of 12 µm in diameter. In addition, it is quite difficult to prepare a filter even when such the module of 3 cm in width is used: According to preferred embodiments of this invention, however, a parallel alignment of monofilaments in the filter module is kept orderly, while considerable width thereof is secured.

According to an embodiment of this invention, as a slit formed between adjacent monofilaments functions as a filtration opening, it is necessary to minimize distortion of monofilaments. In order to avoid the distortion, linkage band portions are formed so that monofilaments are always kept in parallel orderly. These portions are formed almost at right angles in the longer direction of monofilaments, thereby an ordered alignment thereof being kept securely.

Width of the linkage band portions is preferably narrow as possible to increase the filtration efficiency, although they may be wide enough to link the monofilaments and are not limited to specific width.

The linkage band portions may be formed as a continuous line across the filter module, i.e., a slender set of monofilaments or as shorter discontinuous lines dispersed thereon which cover the width as a whole. Distribution of such shorter linkage band portions and width homogeneity thereof may be relatively decided depending on width of the module, material and fineness of monofilaments, etc. and are not to be specified independently.

The linkage band portions of either single continuous or dispersed discontinuous type cover substantial width of the filter module as a whole. With regard to the distributed discontinuous type, a linkage band portion is preferably distributed to overlap both ends thereof in parallel slightly with those ends of the nearest two portions in the long direction of monofilaments or, at least, to keep the portion at a position where these monofilaments hardly play freely.

The linkage band portions of either the single continuous or distributed discontinuous type may be arranged in the long direction of monofilaments at equal or different intervals.

These intervals are preferably too long. When the intervals are too long, high filtration accuracy or efficiency can not be obtained because of a slight difference in stretch ratio of monofilaments between locations thereof in the vicinity of the linkage band portion and in the middle of monofilaments and a difference in spaces between these filaments caused thereby.

The linkage band portions may be formed either by thermally welding of monofilaments or by means of an adhesive.

Preferably, knot-portions are formed on monofilaments in the long direction as a whole at shorter intervals compared with those intervals of linkage band portions so as to keep spaces between slits.

The knot portions may be formed on each monofilament in a similar or different manner of arrangement.

When the knot portions are arranged in the same location between two monofilaments, the knots come into contact with each other to leave certain slit spaces between these filaments. On the other hand, when the knots are arranged in the different location, each knot comes into contact with an adjacent monofilament to leave a certain slit space.

It is preferable that size of the knot portions almost at right angles in the long direction of monofilaments and the intervals between each knot portion are 1.03 to 1.5 times and 5 to 100 times in outer diameter thereof, respectively.

The knot portions are useful to secure slit spaces as a filtration opening between monofilaments.

It is preferable to form the knot portions integrally with monofilaments. The knot portions may be formed by means of, for example, electrical discharge, thermal irradiation, laser irradiation, etc., although any other means can be applied.

The knot portions are preferably formed into a outward protruding shape as uniform as possible around a monofilament, although they are not limited to a specific' shape.

Larger size of the knot portions than that of described above allows to inconveniently widen slits between monofilaments, thereby missing fine solids to be filtered off and lowering the filtration efficiency, while smaller size tends to cause clogging because of excessively narrow slit spaces, thereby also lowering the efficiency.

Intervals between the knot portions are preferably 5 to 100 times of fineness in diameter of monofilaments. At intervals longer than described above, adjacent monofilaments easily come into contact with each other in the middle thereof and make it difficult to keep the slit spaces appropriately.

At intervals shorter than described above, adjacent knot portions interfere and come into contact with each other to excessively widen slit spaces thereof. Such inconvenience can be avoided by means of knot portions having suitable size.

Monofilaments of 0.03 to 0.001 mm in diameter may be aligned laterally to form a mono-layer membrane as a filter medium or laminated to form a laminated material.

When the filter medium of this invention is used as a laminate, monofilaments may be aligned in parallel or intersected each other.

Slit-like filtration openings are formed thoroughly between adjacent monofilaments because of nearly uniform fineness and surface properties thereof. The slit-like filtration openings are also formed between monofilaments by means of the knot portions. Filtration in this invention is conducted through these sit-like filtration openings.

While leaving at rest, monofilaments adhere each other to make the filtration openings kept quite narrow. On the other hand, the filter is pressed against a low pressure side due to a difference in pressure between both surfaces of the filter during a filtration process, which is caused by pressure on the water supply side and back pressure on the suctioning side. Monofilaments are stretched and thinned in the above mentioned situation so that the filtration openings between them are opened wide enough to conduct filtration.

Pressure against the filter caused by filtering water, etc. can be controlled easily, which means that the filtration openings can also be adjusted without difficulties during the filtration operation by selecting a suitable filter medium, although it is necessary to keep such the pressure within the elastic limit of filter medium to be used.

Free adjustability of the filtration openings during the filtration operation makes it possible to easily control the capacity and accuracy of filtration and, at the same time, to apply the same filter to various types of substances to be filtered off. Fine filtration may be conducted under a condition of lower pressure against the filter, while large quantity filtration may be conducted under a condition of higher pressure. Filtration of high accuracy and efficiency can easily be conducted by accurate pressure control against the filter during the filtration operation.

Back washing of the filter can be effectively conducted in a similar manner as described above. The filtration openings are opened wider by flowing back washing water at higher pressure compared with the filtering water so that substances to be filtered off are effectively and almost completely washed away and scarcely left in the filtration openings. Thus, the filter can be completely regenerated for repeated reuse, thereby durability thereof being improved unexpectedly.

Starting materials of the filter of this invention preferably include synthetic resins of high stretch modulus, although there may also be used those resins of not so high stretch modulus.

Thermoplastic synthetic resins used in this invention are not restricted strictly to specific ones and can be selected easily to meet certain substances to be filtered off considering chemical and physical properties thereof.

According to preferred embodiments of this invention, at least 5,000 or more of monofilaments are spun at the same time through the same number of nozzles.

It is impossible in this invention to use a conventional die provided with nozzles of longer pitch because of a great number of monofilaments per unit filter medium. A die provided with nozzles of shorter pitch should be used in this invention, in which nozzles are perforated by means of laser light or wire-cut electrical discharge machine.

As monofilaments are spun through these nozzles of shorter pitch, they tend to slightly adhere with adjacent filaments, which should necessarily be avoided in the filter medium of this invention.

In order avoid such adhesion, the thus spun monofilaments are fed to tapered rollers. Feed length of monofilaments is differentiated in the width direction by means of a tapered roller to separate them smoothly. At least, a pair of tapered rollers is used in this invention. After these monofilaments are differentiated by feeding them through the first tapered roller as described above, they are further separated by restoring their length to the original one through the second tapered roller. Monofilaments are completely separated by using plural pairs of these tapered rollers, thereby their feed length being finally kept constant.

Each one of paired rollers should be arranged conversely with each other with regard to their tapered directions, when plural pairs thereof are used.

Degree of tapering may be changed depending on stretching properties, fineness and number of monofilaments.

Improvement in antistatic properties, separation and parallel alignment of monofillaments can be achieved by, for example, injecting a water soluble oil agent simultaneously during their treatment through the tapered rollers.

The above mentioned treatment through the tapered rollers is a novel and effective means to prepare the filter medium of this invention.

The linkage band portions for keeping parallel alignment of monofilaments may be formed by means of thermal welding or by applying or injecting an adhesive after they are stretched. This process is selective and may be changed to other means to attain the same purpose.

Further, monofilaments may be subjected to a modification treatment by irradiating laser, electrical discharge, infrared, ultrasonic wave, etc. before they are drawn and after stretched.

The knot portions may be formed simultaneously with the modification treatment.

As monofilaments are aligned in parallel in the form of mono-layer as the filter medium in advance, their alignment is securely kept. It has been disclosed to prepare a filter by winding a single wire as a coil or cylinder in Published Japanese Patent No. 44-3,728B and Registered Japanese Patent No. 1,716,924, in which a wire of 0.5 mm in diameter and a coil spring shape are used, respectively. These techniques are quite different from this invention because of their shape and a restricted preparing method.

The filter medium of this invention may be used as a filter module element to form a filter module.

The filter of this invention may be used for precision filtration and water filtration.

### EXAMPLE

Referring now to the drawings, this invention will be detailed as follows.

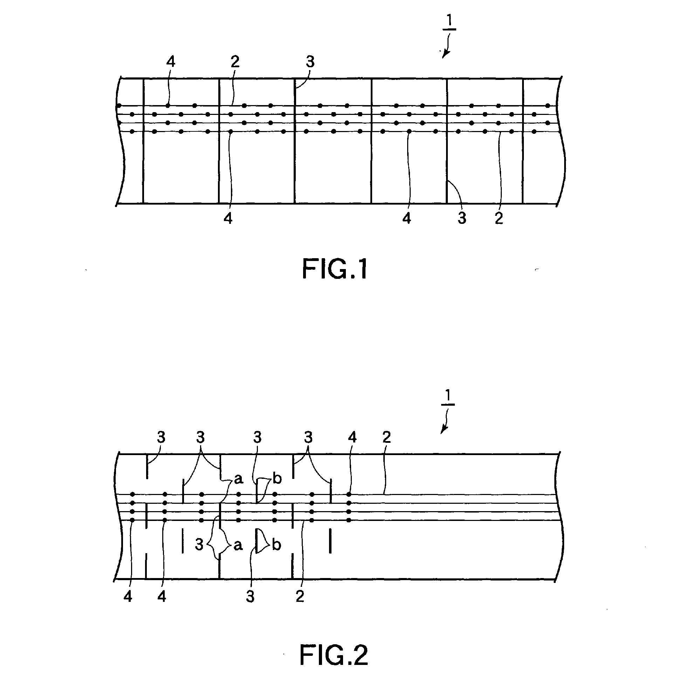

Figs. 1 and 2 are illustrative views of a filter medium of this invention. In the drawings, numerals 1, 2, 3 and 4 designate a filter medium, tightly aligned nylon monofilaments, linkage band portions arranged at equal intervals crossing at right angles with monofilaments 2 for keeping their alignment in parallel, and knot portions, respectively.

According to an embodiment shown in Fig. 1, the filter medium is about 100 mm in width and comprises about 100,000 monofilaments of 0.001 mm in diameter having circular cross section.

These monofilaments were spun by means of spinning die as a laminate of 100 unit dies comprising 1,000 nozzles of 0.5 mm in diameter lined up in a row at pitch width of 1 mm. The nozzles were perforated by means of electrical discharge machine.

The linkage band portions 3 were arranged in the long direction at intervals of about 60 mm and formed by thermally welding monofilaments with each other while irradiating infrared light. On the other hand, spherical knot portions 4 of about 0.0015 mm in diameter were arranged in the width direction at intervals of about 20 mm to allocate them in the middle of those knot portions 4, 4, 4··· formed on respective adjacent monofilaments. These portions were formed by means of laser light irradiation.

According to another embodiment shown in Fig. 2, the filter medium is about 100 mm in width and comprises about 100,000 monofilaments of 0.001 mm in diameter having circular cross section.

These monofilaments were spun in a similar manner as described in Fig. 1.

The linkage band portions 3 in this embodiment were cut into pieces having about one fifth length of the filter medium in the width direction and arrange them to allocate three pieces thereof in the first row at equal intervals and two pieces in the second row so that these pieces in both rows are not doubled at certain intervals, which was repeated to arrange the linkage band portions 3, 3, 3 ··· as shown in Fig. 2. Both ends a and a of the linkage band portions were slightly overlapped with another end b and b of those portions arranged just before and after the portions of concern.

The linkage band portions 3 were about 20 cm in length and arranged at intervals of about 60 cm and formed by thermally welding monofilaments with each other by means of infrared irradiation.

Spherical knot portions 4 of about 0.0015 mm in diameter were arranged in the width direction at intervals of about 20 mm to allocate them in the same position on monofilaments in the long direction. These portions were formed by means of laser light irradiation.

Although most of dimensions used herein are expressed in round numbers accompanied by "about", it should be understood that such approximation is not intended to make this invention vague. The reason why is that dimensions of the filter medium are generally not so precise as those dimensions of precision machinery due to limits of production technology, etc.

The filter medium is rolled up by a wind-up roller as a 50 m-unit of final product.

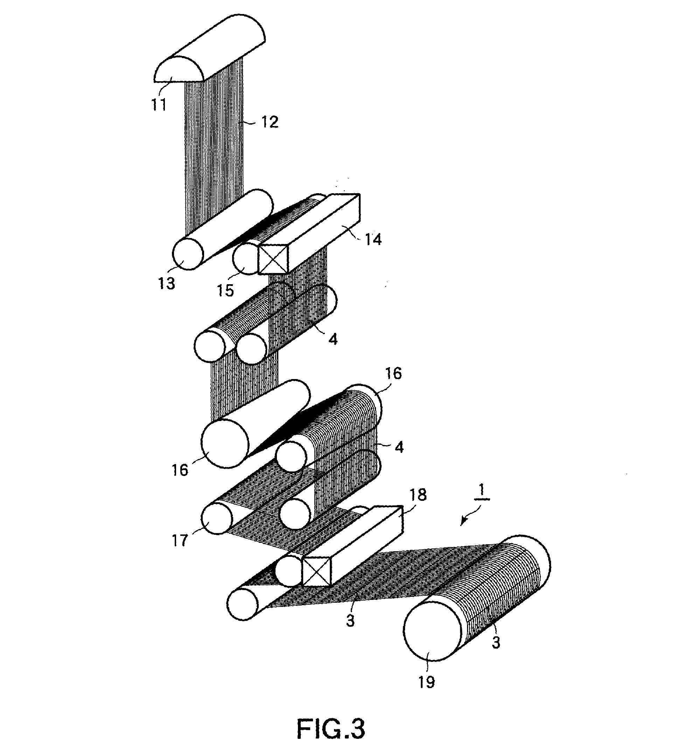

Fig. 3 is a flow chart of a filter medium according to this invention.

In Fig. 3, numerals 11, 12, 13, 14, 15, 16 and 16, 17, 18 and 19 designate a spinning die, monofilaments just after spinning, a drawing roller, a device for injecting water soluble agents such as sizing agent or irradiating laser light, etc., a surface treatment roller, a pair of tapered rollers, a finishing roller, an infrared welding device and a wind-up roller, respectively.

Monofilaments 12 are injected from nozzles of the spinning die 11 and drawn by means of the drawing roller 13 to make them finer with air-cooling.

Then, monofilaments are fed to the surface treatment roller 15 for surface smoothening, followed by an IR irradiation treatment for keeping their parallel alignment and modifying them by means of the infrared irradiation device 14, thereby knot portions 4 being formed simultaneously.

These modified monofilaments are fed to a pair of tapered rollers 16 and 16 successively to differentiate their feed length while stretching, thereby slightly stuck filaments after spinning being separated and aligned in parallel as a mono-layer. The tapered rollers 16 and 16 are arranged in parallel to their rotation shafts and in the converse direction to their tapers with each other.

This situation of monofilaments is further kept without disordering parallel and mono-layer alignment thereof even after subsequent treatments passing through rollers.

The mono-layer of parallel monofilaments is then subjected to a finishing stretch treatment by means of the stretching roller 17.

Then, the linkage band portions are formed to further keep the parallel situation of monofilaments by means of the infrared irradiation device 18, thereby yielding a complete product of filter medium. The product of predetermined length is rolled up by the wind-up roller 19. The linkage band portions may be formed by injecting adhesives, etc.

As the flow chart shown in Fig. 3 is just an embodiment of this invention, order of each process or devices to be used for various treatments may be changed if necessary, as a matter of course.

Monofilament modification by irradiating laser light may be conducted by another means such as arcing, infrared or ultrasonic irradiation.

## Claims

1. A filter medium of substantial tape-like form comprising at least 5,000 thermoplastic synthetic resin monofilaments of 0.03 to 0.001 mm in diameter aligned in parallel orderly in which said monofilaments are linked with each other in the longer direction thereof to form a plurality or number of linkage band portions crossing therewith at almost right angles in substantial width direction thereof so as to keep the thus aligned monofilaments in parallel.

2. A filter medium claimed in claim 1 in which each of the linkage band portions is formed into a row as a whole in the width direction to a tape-like alignment of monofilaments.

3. A filter medium claimed in claim1 in which the linkage band portions are arranged as short pieces in the width direction to a tape-like alignment of monofilaments so that plural pieces thereof cover whole width thereof.

4. A filter medium claimed in claim 1 in which the linkage band portions are formed by thermally welding monofilaments with each other.

5. A filter medium claimed in claim 1 in which the linkage band portions are formed by linking by means of an adhesive.

6. A filter medium claimed in claim 1 in which knot portions are formed between the linkage band portions at shorter intervals than those intervals of linkage band portions.

7. A filter medium claimed in claim 6 the knot portions are allocated in the same positions of each monofilament in long direction thereof.

8. A filter medium claimed in claim 6 the knot portions are allocated in the different positions of each monofilament in the long direction thereof.

9. A filter medium claimed in claim 6 in which the knot portions crossing at almost right angle in the long direction of monofilaments measure 1.03 to 1.5 times of an outer diameter thereof and are arranged at intervals of 5 to 100 times of an outer diameter thereof.

10. A method for preparing a filter medium of membrane type made of thermoplastic synthetic resin monofilaments of 0.03 to 0.001 mm in diameter in which said monofilaments are spun out of a melt thermoplastic synthetic resin through a number of parallel or plurally lined spinning nozzles, air-cooled, drawn to reduce thickness thereof, subjected to a modification treatment, orderly aligned in parallel to form a mono-layer, linked by linkage band portions formed thereon at certain intervals to keep a parallel alignment thereof, and then stretched, said alignment being done by feeding said monofilaments between at least one pair of two tapered rollers fixed in the converse direction with each other.

11. A method for preparing a filter medium claimed in claim 10 in which at least 5,000 or more of monofilaments are spun simultaneously through the same number of nozzles.

12. A method for preparing a filter medium claimed in claim 10 in which the linkage band portions are formed by thermal welding or coating or injecting adhesives after stretching.

13. A method for preparing a filter medium claimed in claim 10 in which monofilaments are modified by irradiating laser, electric discharge, infrared thermal light and ultrasonic wave after drawing and before stretching thereof.

14. A method for preparing a filter medium claimed in claim 10 in which modification of monofilaments and formation of the knot portions are conducted simultaneously.
